# EUROPÄISCHE PATENTSCHRIFT

(11) **EP 3 411 183 B1**
(45) Veröffentlichungstag und Bekanntmachung des Hinweises auf die Patenterteilung: **06.04.2022**
(21) Anmeldenummer: 17702386.8
(22) Anmeldetag: 01.02.2017
(51) Int. Cl.: B24B 27/00, B24D 9/08, B23Q 3/155

(54) **VORRICHTUNG ZUM AUTOMATISCHEN WECHSEL VON SCHLEIFSCHEIBEN**
DEVICE FOR AUTOMATICALLY CHANGING GRINDING DISCS
DISPOSITIF DE CHANGEMENT AUTOMATIQUE DE DISQUES DE MEULAGE

(30) Priorität: 04.02.2016 CH 1512016
(43) Veröffentlichungstag der Anmeldung: 12.12.2018
(73) Patentinhaber: Otto Suhner AG, 5200 Brugg (CH)
(72) Erfinder: STAUBLI, Remo, 5525 Fischbach-Göslikon (CH)
(74) Vertreter: Gachnang, Hans Rudolf
(86) Internationale Anmeldenummer: PCT/EP2017/052179
(87) Internationale Veröffentlichungsnummer: WO 2017/134122

(56) Entgegenhaltungen:
- EP-A1- 1 916 062
- EP-A2- 2 463 056
- WO-A1-2015/125068
- DE-A1-102006 060 310
- US-B1- 7 144 313

## Beschreibung

Gegenstand der Erfindung ist eine Vorrichtung zum automatischen Wechsel von Schleifscheiben gemäss Oberbegriff des Patentanspruchs 1. Gegenstand der Erfindung ist ferner ein System umfassend eine Vorrichtung zum automatischen Wechsel von Schleifscheiben gemäss Anspruch 11.

Eine automatische Schleifvorrichtung enthält einen Werkzeugkopf mit einer Aufnahmevorrichtung für eine Schleifscheibe. Diese Aufnahmevorrichtung ist beispielsweise als Schleifteller ausgebildet, der eine Klettverbindung enthält, die insbesondere als Velcro ^{®}-Pad ausgebildet sein kann. Auf dem Schleifteller kann eine Schleifscheibe aufgelegt und durch den Kletterschluss am Schleifteller gehalten werden. Die Häkchen der Klettverbindung greifen hierbei in die filzartige Oberfläche der Schleifscheibe ein, sodass die Schleifscheibe durch die Klettverbindung am Werkzeug an der Oberfläche des Schleiftellers gehalten wird. Der Schleifteller kann eine Drehbewegung oder eine Exzenterbewegung ausführen, oder eine Kombination nach Art einer Taumelbewegung, sodass ein Polieren einer beliebig geformten Oberfläche eines Werkstücks mit dem Schleifwerkzeug erfolgen kann. Der Werkzeugkopf kann Bestandteil einer Manipulationsvorrichtung sein, beispielsweise kann der Werkzeugkopf an einem Manipulationsarm angebracht sein, insbesondere an einem Roboterarm.

Roboterarme für diverse Anwendungen sind beispielsweise aus der WO2015074089A1 bekannt. Ein derartiger Roboterarm besteht aus mehreren Armsegmenten, Dämpfungselementen zur Kopplung des ersten und zweiten Armsegments, einem Sensor zur Erfassung der Lage des ersten Armsegments in Bezug auf das zweite Armsegment sowie eine Steuereinheit, welche den Antriebsmotor für den Roboterarm in Abhängigkeit vom erhaltenen Sensorsignal ansteuert und den Roboterarm in eine Sollposition bewegt, wenn auf den Roboterarm keine Kraft wirkt. Ein derartiger Roboterarm wird beispielsweise zum Stapeln von Gegenständen verwendet, was in der WO2014205475A1 gezeigt ist. Wenn man derartige Gegenstände präzise positionieren möchte, muss der Gegenstand von einem Manipulator ergriffen und präzise bewegt werden, wozu gemäss WO2014205475A1 ein Aktor verwendet wird, der zwischen dem Manipulator und dem zu positionierenden Gegenstand angeordnet ist.

Schleifscheiben müssen als Verschleissteile periodisch ausgewechselt werden. Eine Möglichkeit des Auswechselns der Schleifscheiben besteht darin, den Schleifvorgang zu unterbrechen, die Schleifvorrichtung abzustellen und die Schleifscheibe manuell auszutauschen, weil die Komplexität dieses Arbeitsablaufs nach den vorstehenden Ausführungen eine Automatisierung desselben als nicht wirtschaftlich erscheinen hat lassen.

Ein möglicher Lösungsansatz besteht darin, die komplexen Manipulationsaufgaben in einfache Teilaufgaben zu zerlegen, sodass der Steuerungsaufwand für jede der Teilaufgaben verringert ist. Diesem Ansatz folgt die DE 20 2013 101 858 U, die eine Anlage zum automatischen Auswechseln von Schleifscheiben offenbart. Der Wechsel der Schleifscheiben erfolgt in drei Stationen, die nacheinander vom Werkzeugarm des Roboters besucht werden, eine Ablösestation, eine Ausrichtstation und eine Beladestation.

WO 2015/125068 A1 offenbart eine Vorrichtung zum automatischen Wechsel von Schleifscheiben, gemäß dem Oberbegriff von Anspruch 1.

Aus der EP 1916062A1 ist ein Vorratsbehälter mit übereinander gestapelten und bezüglich der Absaugausnehmungen für Schleifstaub exakt ausgerichtete Schleifmittel bekannt. Die übereinander gestapelten Schleifmittel sind auf einem in einem Zylinder exakt vertikal geführten Teller angeordnet. Dieser ist weder dreh- noch in x- oder y-Richtung verschiebbar, so dass das Erfassen der einzelnen Schleifkörper mit einem Roboterarm nur in einer einzigen exakt voraus positionierten Lage möglich ist. Geringfügige Abweichungen der Lage des Roboterarms führen dazu, dass die Schleifscheiben nicht aufgenommen werden können.

Aus der US 7,144,313 B1 ist weiter ein Stapelbehälter bekannt, mit darauf angeordneten exakt übereinander liegenden Schleifscheiben, welche paketweise einer automatisierten Schleifanlage vorgelegt werden können. Wie bei der erstgenannten Schrift sind auch hier die Schleifscheiben horizontal unbeweglich gehalten, weshalb das Erfassen durch einen Roboterarm mit höchster Präzision erfolgen muss.

Die Ablösestation ist als eine horizontale Unterlage ausgebildet, auf welche der Werkzeugkopf mit der auszuwechselnden Schleifscheibe abgestellt werden kann. Ein Schieber wird zwischen der Schleifscheibe und dem Werkzeugkopf positioniert und die Schleifscheibe mit dem Schieber gegen die Unterlage gedrückt. Wenn der Werkzeugkopf von der Ablösestation entfernt wird, wird die Schleifscheibe vom Schieber zurückgehalten. Danach wird der Schieber in seine Ausgangsstellung zurückgefahren und die Unterlage gekippt, sodass die gebrauchte Schleifscheibe entsorgt werden kann.

Der Werkzeugkopf fährt anschliessend eine Ausrichtstation an, die dazu dient, den Werkzeugkopf in einer definierten Lage zu positionieren, sodass eine neue Schleifscheibe korrekt auf dem Werkzeugkopf positioniert werden kann. Hierzu enthält die Station Sensoren, welche die Sollposition der Absaugöffnungen am Werkzeugkopf erfassen und über eine Steuerung den Stellmotor des Werkzeugkopfs einschalten, um den Werkzeugkopf in die Sollposition zu bringen.

Der Ausrichtstation ist eine Beladestation nachgeschaltet, welche einen Stapel von neuen Schleifscheiben enthält. Der ausgerichtete Werkzeugkopf kann präzise auf dem Stapel der Schleifscheiben positioniert werden, um die zuoberst liegende Schleifscheibe vom Stapel zu nehmen. Die Schleifscheibe bleibt in der korrekten Position haften, wobei unter korrekter Position eine Position zu verstehen ist, in welcher die Absaugöffnungen am Werkzeugkopf über den Öffnungen in der Schleifscheibe liegen.

Diese Vorrichtung hat sich insofern als nachteilig erwiesen, als dass die Schleifscheibe während des Ablösens durch den Schieber beschädigt werden kann, wenn ihre Position relativ zur Ablösestation nicht präzise genug bestimmt ist. Um diesem Nachteil abzuhelfen, wurde eine Vorrichtung zum automatischen Wechsel von Schleifscheiben gemäss der EP 2 842 689 B1 konzipiert. Eine derartige Vorrichtung weist ein Anschlagelement zur Abnahme einer Schleifscheibe von einem Schleifwerkzeug auf, an welches die Kopfplatte mit der Schleifscheibe in einer Abnahmeposition anlegbar ist, mindestens einen Abnahmefinger, welcher zwischen einer Rückzugsposition und einer Eingriffsposition verstellbar ist, sowie eine Spanneinrichtung, durch welche der Abnahmefinger relativ zum Anschlagelement verschiebbar ist. Mittels des Abnahmefingers kann die Schleifscheibe am Anschlagelement festgespannt werden. Der Abnahmefinger ist frei von scharfen Kanten, sodass eine Beschädigung der Schleifscheibe und demzufolge ein allfälliger Abbruch des Abnahmevorgangs durch unvollständig entfernte Schleifscheiben oder durch Blockierung der Abnahmevorrichtung vermieden wird.

Das Auswechseln der Schleifscheiben ist allerdings aufwändig, da das am Roboterarm geführte Schleifwerkzeug einen speziellen Aufsatz zum Abnehmen der Schleifscheiben aufweist. Dieser Aufsatz weist eine Mehrzahl von Ausnehmungen an dessen Umfang auf, in welche die Finger der Schleifscheibenabnahmevorrichtung eingreifen können. Hierzu ist es erforderlich, dass das am Roboterarm angebrachte Schleifwerkzeug mit der gebrauchten Schleifscheibe präzise auf der Schleifscheibenabnahmevorrichtung positioniert wird. Hierzu muss nicht nur die Mittenachse der Schleifscheibe mit der Mittenachse der Schleifscheibenaufnahmevorrichtung übereinstimmen, sondern auch der Winkel, in welchem die Schleifscheibe auf der Schleifscheibenaufnahmevorrichtung zu liegen kommt, muss exakt eingehalten werden. Wenn es zu Winkelabweichungen kommt, können die Finger der Schleifscheibenaufnahmevorrichtung die Schleifscheibe nicht mehr ergreifen, sodass die Abnahme der Schleifscheibe nicht erfolgen kann. Wenn die gebrauchte Schleifscheibe von den Fingern der Schleifscheibenaufnahmevorrichtung erfasst worden ist, kann sie vom Werkzeug abgenommen werden. Hierzu greifen die Finger der Schleifscheibenaufnahmevorrichtung in entsprechende Nuten auf der Schleifscheibenauflage des Werkzeugs ein. Das heisst aber, dass die Schleifscheibenauflage exakt entsprechend der Vorgaben der Schleifscheibenaufnahmevorrichtung gefertigt werden muss.

Nach der Abnahme der gebrauchten Schleifscheibe wird das Werkzeug vom Roboterarm auf einem Schleifscheibenspender positioniert. Der Schleifscheibenspender oder die Stapelvorrichtung ist als ein zylinderförmiger Hohlraum ausgebildet, in welchem eine Mehrzahl von Schleifscheiben übereinander gestapelt ist. Der Innendurchmesser des Hohlraums ist etwas grösser als der Aussendurchmesser der Schleifscheiben. Die Schleifscheiben enthalten eine Mehrzahl von Löchern. Durch zwei dieser Löcher ist je ein Dorn hindurchgeführt, sodass die Schleifscheiben durch den entsprechenden Dorn in einer bestimmten Lage fixiert sind. Aus der vorhergehenden Beschreibung ist entnehmbar, dass das automatische Auswechseln von Schleifscheiben immer noch einen komplizierten Ablauf impliziert, der durch die zweimalige Ausrichtung des Werkzeugkopfs bei der Entnahme der Schleifscheibe sowie bei der Aufnahme einer neuen Schleifscheibe erfordert.

Aufgabe der vorliegenden Erfindung besteht darin, eine Vorrichtung bereitzustellen, um den automatisierten Schleifscheibenwechsel zu vereinfachen.

Insbesondere ist es Aufgabe der Erfindung, den die Schleifscheibenaufnahme des Schleifwerkzeugs und die Schleifscheibe auf vereinfachte Weise derart auszurichten, dass in der Schleifscheibenaufnahme angeordnete Absaugöffnungen für Schleifgut mit entsprechenden auf der Schleifscheibe angeordneten Öffnungen fluchten, sodass die Absaugung von Abrieb durch die Schleifscheibe nicht behindert wird.

Gelöst wird diese Aufgabe durch eine Vorrichtung gemäss den Merkmalen des Patentanspruchs 1. Vorteilhafte Ausgestaltungen der Vorrichtung sind Gegenstand der abhängigen Ansprüche 2 bis 10.

Eine Vorrichtung zum automatischen Wechsel von Schleifscheiben umfasst eine Stapelvorrichtung für eine Mehrzahl von Schleifscheiben, sowie ein Führungselement zur Ausrichtung der Schleifscheiben übereinander entlang einer gemeinsamen Mittenachse, wobei das Führungselement in Bezug auf die Mittenachse exzentrisch angeordnet ist. Ein Positionierelement zur Positionierung eines Werkzeugkopfs ist vorgesehen, wobei das Positionierelement und das Führungselement schwimmend gelagert sind. Das Positionierelement ist insbesondere entlang der Mittenachse angeordnet, sodass die Mittenachse der Längsachse des Positionierelements entspricht. Das Positionierelement ist insbesondere ein rotationssymmetrischer Körper, dessen Symmetrieachse die Mittenachse ist. Beispielsweise kann das Positionierelement als ein Zylinder ausgebildet sein.

Der Vorteil dieser schwimmenden Lagerung liegt darin, dass die Positionierung des Werkzeugs auf dem Positionierelement sehr einfach erfolgen kann. Ein Loch im Werkzeug erfasst das in zentraler Lage angeordnete Positionierelement mit einem konischen oberen Ende und kann auf dieses aufgesetzt werden, selbst wenn das Werkzeug das Positionierelement nicht exakt mittig trifft, da die Position des Werkzeugkopfs mit der Schleifscheibenaufnahme über die schwimmende Lagerung ausgeglichen werden kann. Somit ergibt sich bei der Positionierung des Werkzeugkopfs mit der Schleifscheibenaufnahme auf dem Positionierelement der Stapelvorrichtung eine Zeitersparnis sowie verminderte Anforderungen betreffend die Präzision der Positionierung.

Nach einem Ausführungsbeispiel ist ein Bodenelement zur Aufnahme des Positionierelements und des Führungselements vorgesehen. Insbesondere kann das Bodenelement ein schwingungsfähiges Element, beispielsweise mindestens ein Federelement, enthalten, durch welches eine Bewegung des Bodenelements in Radialrichtung in Bezug auf die Mittenachse ermöglicht ist. Das Bodenelement kann auch als Zwischenboden ausgebildet sein, der in einer Stapelvorrichtung angeordnet ist und von den federnden Elementen gehalten ist.

Das Bodenelement kann in einem Gehäuse einer Stapelvorrichtung aufgehängt werden. Das schwingungsfähige Element kann auch ein elastisches Material enthalten, wobei das elastische Material in radialer Richtung reversibel dehnbar oder stauchbar sein kann.

Unter radialer Richtung wird hierbei jede Auslenkung der Mittenachse in einer das Bodenelement enthaltenden Normalebene zur Mittenachse verstanden. Wenn die Schleifscheiben in der Stapelvorrichtung horizontal angeordnet sind, ist das Bodenelement ebenfalls horizontal angeordnet. Die Normalebene ist in diesem Fall eine Horizontalebene. Wenn in dieser Horizontalebene ein kartesisches Koordinatensystem derart angeordnet wird, dass die z-Achse der Mittenachse entspricht, können Bewegungen des Bodenelements in zumindest einer der x oder y-Achsen erfolgen.

Das Positionierelement ist insbesondere in Richtung der Mittenachse axial bewegbar. Das Positionierelement kann als ein Stab ausgebildet sein, welcher im Bodenelement aufgenommen ist. Insbesondere kann das Positionierelement in einer Bohrung im Bodenelement aufgenommen sein, wobei in der Bohrung ein Abstandselement angeordnet ist. Das Abstandselement befindet sich somit am oder unterhalb des unteren Endes des Positionierelements. Das Positionierelement kann somit in axialer Richtung beim Kontakt mit einer Schleifscheibenaufnahme eines Werkzeugkopfs ausweichen, sodass ein sanfter Kontakt zwischen Positionierelement und Schleifscheibenteller erfolgt. Hierdurch können Schäden an der Schleifscheibenaufnahme bei der Positionsfindung vermieden werden, da beim Kontakt mit dem Positionierelement keine schädlichen Kräfte in die Schleifscheibenaufnahme eingeleitet werden. Das Abstandselement kann mindestens ein Element der Gruppe der Federelemente, der elastischen Elemente oder der magnetisierbaren Elemente enthalten.

Nach einem Ausführungsbeispiel weist das Positionierelement eine grössere Höhe als das Führungselement auf. Hierdurch wird sichergestellt, dass während des Positioniervorgangs zur Festlegung der radialen Position die Schleifscheibenaufnahme durch das Positionierelement und nicht durch die Führungselemente berührt wird. Das heisst, die Mittenachse der Schleifscheibenaufnahme wird in Übereinstimmung mit der Mittenachse der Stapelvorrichtung gebracht. Die Schleifscheibenaufnahme ist frei beweglich, um eine Taumelbewegung während des Schleifvorgangs ausüben zu können. Durch diese freie Beweglichkeit in Drehrichtung ist aber der genaue Aufenthaltsort der Schleifscheibe bzw. von deren zentral angeordneten Öffnung nicht bekannt, bis die Schleifscheibenaufnahme auf dem Positionierelement aufgenommen ist. Sobald das obere Ende des Positionierelements in die Schleifscheibenaufnahme eingreift, ist die axiale Ausrichtung der Schleifscheibenaufnahme in Bezug auf die Mittenachse der Schleifscheiben bzw. des Positionierelements vorgegeben.

Daher muss nur noch die radiale Position der Schleifscheibenaufnahme in Bezug auf die Schleifscheibe gefunden werden. Das Führungselement verläuft durch eine der exzentrisch zur zentralen Öffnung angeordneten Öffnungen, die in der Schleifscheibe vorgesehen sind, um das Absaugen von Abrieb im Betrieb zu ermöglichen.

Das Positionierelement ist nach einem Ausführungsbeispiel als ein Stab ausgebildet, wobei das Positionierelement ein unteres Ende aufweist, welches in der Bohrung aufgenommen ist und ein oberes Ende aufweist, welches über die zuoberst angeordnete Schleifscheibe hinausragt, wobei das obere Ende insbesondere einen konischen Abschnitt umfasst. Die Schleifscheibenaufnahme befindet somit in dieser Stellung, in welcher sie auf dem konischen Abschnitt angeordnet ist, d.h. noch nicht in Kontakt mit dem Führungselement. Daher ist die Schleifscheibenaufnahme um das Positionierelement frei drehbar, sodass die korrekte Position der Schleifscheibe in Bezug auf die Schleifscheibenaufnahme in einer nachfolgenden radialen Justierung eingestellt werden kann.

Für die Justierung in Umfangsrichtung muss die Schleifscheibenaufnahme in einer Position über der Schleifscheibe zu liegen kommen, in welcher die Öffnungen der Schleifscheibe mit den Ausnehmungen der Schleifscheibenaufnahme fluchten, wenn die korrekte Position erreicht ist. Nach einem Ausführungsbeispiel kann diese Position mittels einer Erkennungsvorrichtung gefunden werden. Diese Position kann beispielsweise mittels eines einzigen Sensors gefunden werden. Der Sensor kann ein Sensor sein, wie er in der DE 20 2013 101 858 U1 oder der EP 2 842 689 B1 beschrieben ist, sein. Allerdings wird nur ein einziger Sensor benötigt, da nur die Winkelposition der Ausnehmung der Schleifscheibenaufnahme in Bezug auf die Öffnung in der Schleifscheibe festgelegt werden muss. Sobald der Sensor eine Ausnehmung detektiert, erfolgt die Anweisung an die Steuerung des Werkzeugkopfs, den Werkzeugkopf und damit die Schleifscheibenaufnahme in die Position zu drehen, in welcher die Öffnung in der Schleifscheibe und die Ausnehmung an der Schleifscheibenaufnahme fluchten.

Für diese Justierung kann nach einem weiteren Ausführungsbeispiel die Schleifscheibenaufnahme mittels eines Antriebselements in Drehung versetzt werden. Das Antriebselement kann beispielsweise eine Düse enthalten, mittels welchem ein Druckfluidstrahl erzeugbar ist. Beispielsweise kann der Druckfluidstrahl ein Druckluftstrahl sein, es können aber auch andere Fluide, insbesondere Gase verwendet werden.

Das Antriebselement könnte jede beliebige andere, dem Fachmann geläufige Bauweise aufweisen, um eine Drehbewegung der Schleifscheibenaufnahme zu bewirken. Beispielsweise könnte die Schleifscheibenaufnahme mit dem Antriebselement kraftschlüssig oder reibschlüssig verbindbar sein. Die Schleifscheibenaufnahme kann beispielsweise einen Zahnkranz aufweisen, der mit einem Antriebsritzel koppelbar ist. Alternativ oder in Ergänzung hierzu kann das Antriebselement einen Magneten oder ein magnetisierbares Material enthalten, welches mit einem entsprechenden Gegenelement an der Schleifscheibenaufnahme koppelbar sein kann.

Gemäss eines Ausführungsbeispiels dient das als Düse ausgebildete Antriebselement dazu, einen Druckfluidstrahl auf die Schleifscheibenaufnahme zu lenken, um die Schleifscheibenaufnahme in eine Drehbewegung zu versetzen. Die Drehgeschwindigkeit der Drehbewegung und/oder die gewünschte Distanz können durch die Zeitdauer und/oder Intensität des Druckfluidstrahls eingestellt werden. Beispielsweise kann ein Druckfluidimpuls mit einer Zeitdauer von vorzugsweise maximal 1 sec auf die Schleifscheibenaufnahme aufgebracht werden, sodass die Schleifscheibenaufnahme in eine Drehbewegung versetzbar ist. Die Drehbewegung ist derart regelbar, dass die Schleifscheibenaufnahme in einer Position über der Schleifscheibe zu liegen kommt, in welcher die Öffnungen der Schleifscheibe mit den Ausnehmungen der Schleifscheibenaufnahme fluchten, wenn die korrekte Position erreicht ist.

Diese Position kann wie im vorhergehenden Ausführungsbeispiel mittels einer Erkennungsvorrichtung gefunden werden, beispielsweise mittels eines einzigen Sensors. Das Antriebselement weist eine Steuerung auf, mittels welcher die korrekte Position der Schleifscheibenaufnahme ermittelt werden kann. Das Antriebselement kann beispielsweise, wie vorgehend beschrieben, eine Drehbewegung der Schleifscheibenaufnahme einleiten. Dieses Antriebselement muss sich somit nicht im Werkzeugkopf befinden, womit die Bauweise des Werkzeugkopfs vereinfacht werden kann, da der Werkzeugkopf keinen Antrieb benötigt, der zur Justierung der Schleifscheibenaufnahme geeignet ist.

Alternativ oder in Ergänzung hierzu kann die Intensität des Druckfluidstrahls geregelt werden. Beispielsweise kann über eine Änderung des Durchflussquerschnitts der Düsenöffnung die Austrittsgeschwindigkeit des Druckfluids verändert werden, sodass die Schleifscheibenaufnahme durch Regelung des Antriebselements in die von der Erkennungsvorrichtung vorgegebene Position bewegt werden kann.

Nach einem Ausführungsbeispiel ist die Stapelvorrichtung in einem Behälter aufgenommen. Der Behälter enthält einen Behälterboden und einen Behälterdeckel mit einer Öffnung, durch welche jeweils eine der Schleifscheiben entnehmbar ist. Nach einem Ausführungsbeispiel ist der Durchmesser der Öffnung grösser als der Durchmesser der Schleifscheibe.

Insbesondere kann ein Rückhalteelement vorgesehen sein, welches in die Öffnung hineinragt. Nach einem Ausführungsbeispiel kann eine Mehrzahl von derartigen Rückhalteelementen vorgesehen sein. Die Rückhalteelemente können verschiebbar sein, sodass sie von einer Halteposition in eine Entnahmeposition verstellbar sind. Beispielsweise können sie während der Zeit, während derer die Schleifscheibe auf der Schleifscheibenaufnahme positioniert wird, die Öffnung zumindest teilweise freigeben, sodass die Schleifscheibe leichter entnommen werden kann. Sobald die Schleifscheibe auf der Schleifscheibenaufnahme positioniert ist, wird das Rückhalteelement wieder in die Halteposition gebracht, sodass der Stapel von Schleifscheiben in der Öffnung gehalten wird.

Der Stapel von Schleifscheiben kann von einem Auflageelement gehalten sein, welches mittels eines Spannelements in Bezug auf das Führungselement und das Positionierelement verschiebbar ist. Das Spannelement kann als Federelement ausgebildet sein. Das Federelement kann zwischen dem Zwischenboden und dem Auflageelement angeordnet sein.

Nach einem weiteren Ausführungsbeispiel kann das Auflageelement mittels eines Hubelements geführt werden. Das Hubelement ermöglicht eine schrittweise Verstellung des Auflageelements, sodass nach Abnahme einer Schleifscheibe die darunterliegende Schleifscheibe an deren Position nachrückt. Das Hubelement kann ein Fluidzylinder, ein Elektromotor, federbelastete Rastelemente oder dergleichen enthalten.

Ein Hubelement zum schrittweisen Nachführen der Schleifscheiben kann insbesondere zum Einsatz kommen, wenn formstabile Schleifscheiben zum Einsatz kommen. Unter einer formstabilen Schleifscheibe wird eine Schleifscheibe verstanden, die sich nur unter Krafteinwirkung verformt, welche mindestens das Doppelte des Eigengewichts der Schleifscheibe beträgt.

Im Gegensatz dazu wird unter einer flexiblen Schleifscheibe eine Schleifscheibe verstanden, die sich bereits unter Einwirkung ihres Eigengewichts verformen kann. Eine derartige Schleifscheibe kann beispielsweise ein Schleifpapier oder einen Polierlappen, beispielsweise aus Leder oder einem textilen Werkstoff, umfassen.

Nach einem weiteren Ausführungsbeispiel kann die Schleifscheibenaufnahme vom Antriebselement in eine Drehbewegung versetzt werden, wobei diese Drehbewegung im Unterschied zu den vorhergehenden Ausführungsbeispielen nicht geregelt zu werden braucht.

Nach einem Ausführungsbeispiel kann das Führungselement mittels eines Betätigungselements axial verschiebbar sein.

Die sich drehende Schleifscheibenaufnahme wird zur Justierung soweit in Richtung auf die Schleifscheibe hin bewegt, bis das Führungselement die Oberfläche der Schleifscheibe berührt. Das Führungselement ist in axialer Richtung verschiebbar. Insbesondere kann das Führungselement ein Betätigungselement enthalten, welches in der Bohrung angeordnet ist. Dieses Betätigungselement kann als Spannelement ausgebildet sein. Das Spannelement wird vorgespannt, wenn die Schleifscheibenaufnahme auf das Führungselement drückt. Insbesondere kann das Spannelement eine Feder umfassen. Das Spannelement des Führungselements wird dadurch geringfügig komprimiert, sodass das obere Ende des Führungselements einen geringen Anpressdruck auf die Schleifscheibenaufnahme ausübt. Sobald das obere Ende des Führungselements eine Ausnehmung in der Schleifscheibenaufnahme vorfindet, kann sich das Spannelement wieder entspannen. Das schleifscheibenaufnahmeseitige Ende des Führungselements gelangt in Eingriff mit der Ausnehmung, wodurch die Drehbewegung der Schleifscheibenaufnahme gestoppt wird. Die korrekte Position der Schleifscheibenaufnahme ist erreicht. Die Schleifscheibenaufnahme kann nunmehr in Richtung zur Schleifscheibe hin bewegt werden, um die Schleifscheibe vom Schleifscheibenstapel aufzunehmen.

Das Betätigungselement kann auch ein magnetisierbares Element umfassen, welches am oberen Ende des Führungselements angebracht ist. Zu diesem magnetisierbaren Element kann ein magnetisierbares Gegenelement in der Bohrung angeordnet sein, wobei sich das magnetisierbare Element des oberen Endes des Führungselements und des magnetisierbaren Gegenelements in der Bohrung abstossen. Wird nun das Führungselement durch den Anpressdruck der Schleifscheibenaufnahme in die Bohrung verschoben erhöht sich die magnetische Abstossungskraft. Sobald sich das obere Ende des Führungselements in einer Ausnehmung befindet, bewegt sich das Führungselement durch die abstossenden Kräfte aus der Bohrung wieder hinaus und gelangt in Eingriff mit der Ausnehmung der Schleifscheibenaufnahme, wodurch deren Drehbewegung gestoppt wird. Die korrekte Position der Schleifscheibenaufnahme ist erreicht. Die Schleifscheibenaufnahme kann nunmehr in Richtung zur Schleifscheibe hin bewegt werden, um die Schleifscheibe vom Schleifscheibenstapel aufzunehmen.

Nach jedem der vorhergehenden Ausführungsbeispiele kann eine Mehrzahl von Führungselementen vorgesehen sein. Insbesondere können zwei oder mehr Führungselemente vorgesehen sein, um die Kraft, die beim Unterbrechen der Drehbewegung auf das Führungselement wirkt, auf zwei oder mehr Führungselemente zu verteilen, sodass jedes Führungselement nur noch den entsprechenden Bruchteil der Kraft aufnehmen muss.

Anstelle eines Spannelements oder zusätzlich zu dem Spannelement kann das obere Ende des Führungselements oben ein magnetisierbares Element enthalten, insbesondere kann das obere Ende einen Magneten enthalten. Dieser Magnet kann von einem entsprechenden magnetisierbaren Gegenelement in der Schleifscheibenaufnahme angezogen werden, wenn die Schleifscheibenaufnahme mit dem Positionierelement in Eingriff ist und während der Drehung eine Ausnehmung über dem magnetisierbaren Endelement zu liegen kommt. Das magnetisierbare Element kann insbesondere in der Ausnehmung der Schleifscheibenaufnahme enthalten sein.

Insbesondere ist es Aufgabe der Erfindung, eine gebrauchte Schleifscheibe von einer Schleifscheibenaufnahme einfach abzulösen, wobei die Vorrichtung zum Ablösen der Schleifscheibe keine beweglichen Teile aufweisen soll.

Gelöst wird diese Aufgabe durch eine Vorrichtung gemäss den Merkmalen des Patentanspruchs 9. Vorteilhafte Ausgestaltungen der Vorrichtung sind Gegenstand des abhängigen Anspruchs 10.

Eine Vorrichtung zum automatischen Wechsel von Schleifscheiben, umfasst eine Ablösevorrichtung für Schleifscheiben, wobei die Ablösevorrichtung eine Auflagefläche für eine Schleifscheibenaufnahme umfasst. Die Auflagefläche weist eine Öffnung auf, deren Durchmesser grösser als der Durchmesser der Schleifscheibe ist. Ein Trennelement ist oberhalb der Öffnung angeordnet. Das Trennelement kann die Öffnung teilweise abdecken, sodass die Schleifscheibenaufnahme nicht in die Öffnung gelangen kann.

Insbesondere kann das Trennelement eine Trennkante aufweisen, wobei die Trennkante eine Spitze umfassen kann. Für die Trennkante kann auch eine Mehrzahl von Spitzen vorgesehen sein. Nach einem Ausführungsbeispiel kann eine v-förmige Spitze vorgesehen sein. Nach einem Ausführungsbeispiel kann eine Spitze verwendet werden, deren Kanten asymmetrisch verlaufen, beispielsweise in der Form einer Guillotine. Nach einem Ausführungsbeispiel kann eine w-förmige Spitze verwendet werden. Eine w-förmige Spitze kann zwei Spitzenelemente aufweisen. Nach einem Ausführungsbeispiel kann ein gezacktes Profil, enthaltend eine Mehrzahl von Spitzen vorgesehen sein.

Das Trennelement kann Rippen aufweisen, welche insbesondere in Bewegungsrichtung der Schleifscheibenaufnahme ausgerichtet sind. Diese Rippen können die Formstabilität erhöhen oder den Ablösevorgang der Schleifscheibe von der Schleifscheibenaufnahme unterstützen. Die Rippen können sich nur auf einer Seite des Trennelements befinden, sie können auch beidseitig angeordnet sein.

Das Trennelement kann als eine Scheibe ausgebildet sein, welche zumindest entlang der Trennkante eine Wandstärke aufweist, die kleiner als der Abstand der Schleifscheibe von der Schleifscheibenaufnahme ist. Beispielsweise kann das Trennelement als ein dünnwandiges Blech ausgebildet sein.

Nach einem Ausführungsbeispiel ist das Trennelement mittels Verbindungsmitteln auf der Auflagefläche lösbar befestigt. Das Trennelement kann von der Auflagefläche abgenommen werden, beispielweise um es durch ein Trennelement anderer Konfiguration zu ersetzen. Somit kann die Ablösevorrichtung für eine Vielzahl verschiedener Schleifscheiben zum Einsatz kommen.

Ein Distanzelement kann zwischen dem Trennelement und der Auflagefläche vorgesehen sein. Mittels des Distanzelements kann der Abstand des Trennelements von der Auflagefläche eingestellt werden. Die Verwendung eines Distanzelements ermöglicht es, die Vorrichtung für unterschiedliche Typen von Schleifscheiben zu verwenden.

Beispielsweise kann eine Schleifscheibe derart auf der Schleifscheibenaufnahme angeordnet sein, dass die Schleifscheibe die Schleifscheibenaufnahme radial überragt. Der Rand einer derartigen Schleifscheibe kann sich aufbiegen, sodass der Rand oberhalb der Trennkante zu liegen kommt.

In diesem Fall kann ein kippbares Trennelement verwendet werden. Das kippbare Trennelement ist derart angeordnet, dass im gekippten Zustand die Trennkante oder zumindest deren Spitze etwas höher gelegen ist, als das gegenüberliegende Ende des Trennelements. Wenn der Rand einer Schleifscheibenaufnahme die Trennkante erreicht, wird an dieser Stelle durch die Schleifscheibenaufnahme ein Kippmechanismus betätigt, der die Trennkante in Richtung der Auflagefläche kippt, sodass sich der Anstellwinkel des Trennelements verringern kann.

Durch die Änderung des Winkels erfasst die Trennkante den Rand der Schleifscheibe und drückt ihn in Richtung der Auflagefläche. Dann kann die Bewegung der Schleifscheibenaufnahme fortgesetzt werden. Das Trennelement kann die Schleifscheibe sukzessive von der Schleifscheibenaufnahme entfernen.

Nach einem Ausführungsbeispiel kann das Trennelement mehr als eine Trennkante aufweisen. Die Trennkanten können insbesondere an mehr als einer Seitenkante des Trennelements angeordnet sein. Insbesondere kann eine derartige Ablösevorrichtung für zwei oder mehrere verschiedene Typen von Schleifscheiben gleichzeitig benutzt werden.

Wenn eine Schleifscheibe mittels einer Klettverbindung auf einer Schleifscheibenaufnahme gehalten ist, ergibt sich funktionsbedingt ein Abstand zwischen der Schleifscheibe und der Schleifscheibenaufnahme, welche durch die Eingriffselemente der Klettverbindung bedingt ist, die untereinander verhaken.

Die Wandstärke des Trennelements an der Trennkante ist daher vorzugsweise geringer als 5 mm, insbesondere weist die Wandstärke einen maximalen Wert im Bereich von 1 mm auf.

Das Trennelement kann ein Ablenkelement enthalten, welches das Ablösen der Schleifscheibe unterstützen kann.

Ein Verfahren zum Ablösen einer Schleifscheibe von einer Schleifscheibenaufnahme umfasst die folgenden Schritte: die Schleifscheibenaufnahme wird über die gezeigte Auflagefläche der Ablösevorrichtung geführt, wobei die Schleifscheibenaufnahme in Kontakt mit der Auflagefläche steht. Hierbei wird die Schleifscheibe vom Trennelement erfasst, das als ein Scheibenelement mit einer Trennkante der Schleifscheibenaufnahme über die Trennkante zwischen die Schleifscheibe und die Auflagefläche eingeschoben, wodurch die Schleifscheibe von der Schleifscheibenaufnahme abgelöst wird. Die Schleifscheibe fällt in eine unterhalb der Trennkante befindliche Öffnung.

Die gebrauchten Schleifscheiben können in einem unterhalb der Öffnung angeordneten Sammelbehälter gesammelt werden und fachgerecht entsorgt werden.

Insbesondere kann mit der erfindungsgemässen Lösung auf eine eigene Ausrichtstation für eine exakte Positionierung des Werkzeugkopfs zur Aufnahme einer neuen Schleifscheibe verzichtet werden, da die Positionierung unmittelbar vor Aufnahme einer neuen Schleifscheibe erfolgt.

Insbesondere kann die Vorrichtung für formstabile und/oder flexible Schleifscheiben zum Einsatz kommen.

Ein System umfasst eine Vorrichtung zum automatischen Wechsel von Schleifscheiben enthaltend eine Stapelvorrichtung nach einem der vorhergehenden Ausführungsbeispiele sowie eine Ablösevorrichtung nach einem der vorhergehenden Ausführungsbeispiele.

Anhand eines illustrierten Ausführungsbeispiels wird die Erfindung näher erläutert. Es zeigen
- Figur 1: eine Ansicht eine Ansicht der Stapelvorrichtung für Schleifscheiben; ohne Schleifscheiben,
- Figur 2: einen Vertikalschnitt durch die Stapelvorrichtung für die Schleifscheiben gemäss Fig. 1,
- Figur 3: einen Vertikalschnitt durch eine Variante der Stapelvorrichtung für Schleifscheiben gemäss Fig. 1,
- Figur 4: eine perspektivische Ansicht einer Ablösevorrichtung für gebrauchte Schleifscheiben,
- Figur 5a: einen Vertikalschnitt durch ein weiteres Ausführungsbeispiel für eine Ablösevorrichtung,
- Figur 5b: einen Vertikalschnitt durch die Ablösevorrichtung gemäss Fig. 5a zu Beginn des Ablösevorgangs

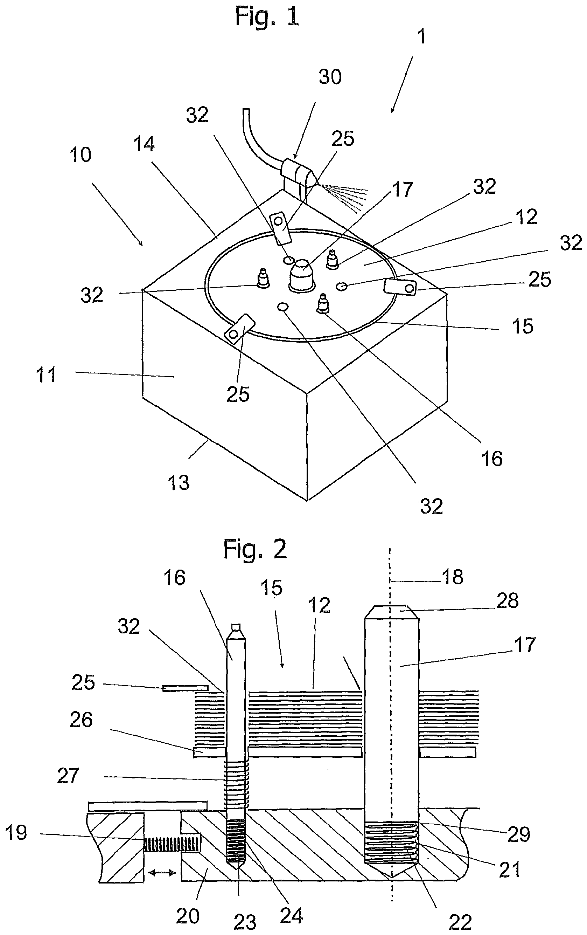

Die Vorrichtung 1 gemäss Fig. 1 zum automatischen Wechsel von Schleifscheiben umfasst eine Stapelvorrichtung 10 enthaltend eine Mehrzahl von Schleifscheiben 12, sowie ein Führungselement 16 zur Ausrichtung der Schleifscheiben 12 übereinander entlang einer gemeinsamen Mittenachse, wobei das Führungselement 16 in Bezug auf die Mittenachse exzentrisch angeordnet ist. Ein Positionierelement 17 ist zur Positionierung einer Schleifscheibenaufnahme vorgesehen, wobei das Positionierelement 17 und das Führungselement 16 schwimmend gelagert sind.

Gemäss Fig. 1 ist die Stapelvorrichtung 10 in einem Behälter 11 aufgenommen. Der Behälter 11 hat einen Behälterboden 13 und einen Behälterdeckel 14 mit einer Öffnung 15, durch welche jeweils eine der Schleifscheiben 12 entnehmbar ist. Der Durchmesser der Öffnung 15 ist grösser als der Durchmesser der Schleifscheibe 12. Es sind drei Rückhaltelemente 25 vorgesehen, welche in die Öffnung 15 hineinragen und die Schleifscheiben 12 in der Stapelvorrichtung 10 zu halten. Nach einer nicht dargestellten Variante ragen das oder die Rückhalteelemente 25 nicht in die Öffnung.

Durch die Schleifscheiben 12 sind ein Positionierelement 17 sowie drei Führungselemente 16 hindurchgeführt, deren obere Enden in Fig. 1 sichtbar sind. Die Schleifscheiben 12 weisen hierzu entsprechende Öffnungen auf, eine zentrale Öffnung für das Positionierelement 17 sowie in der vorliegenden Darstellung sechs Öffnungen 32. Drei dieser Öffnungen 32 enthalten ein Führungselement 16.

In Fig. 2 ist ein Ausschnitt eines Schnitts durch die Stapelvorrichtung 10 gemäss Fig. 1 gezeigt, welcher in einer die Mittenachse 18 des Positionierelements 17 enthaltenden Ebene verläuft. In der Schnittdarstellung ist der Behälter 11 weggelassen, um die Darstellung nicht zu überladen.

Ein Bodenelement 20 ist zur Aufnahme des Positionierelements 17 und des Führungselements 16 im Behälter 11 vorgesehen. Das Bodenelement 20 enthält ein schwingungsfähiges Element 19, z.B. eine Schraubenfeder, durch welches eine Bewegung des Bodenelements 20 in Radialrichtung in Bezug auf die Mittenachse 18 ermöglicht ist. Das Bodenelement 20 kann einen Zwischenboden im Behälter 11 ausbilden, der oberhalb des in Fig. 1 dargestellten Behälterbodens 13 verläuft.

Das Positionierelement 17 weist eine grössere Höhe als das Führungselement 16 auf. Hierdurch ist gewährleistet, dass eine Schleifscheibenaufnahme 100, auch Schleifteller genannt, die an einem Werkzeugkopf angeordnet sein kann, zuerst mit dem Positionierelement 16 in Eingriff gelangt, bevor sie die schleifscheibenauflageseitigen Enden der Führungselemente 16 berührt. Der Werkzeugkopf enthält als Schleifscheibenaufnahme beispielsweise einen frei drehbaren Schleifteller, welcher zur Durchführung eines Schleifverfahrens eine Schleifscheibe 12 trägt.

Die Schleifscheibenaufnahme kann insbesondere eine kombinierte Dreh- und Verschiebebewegung ausführen, was in einer Taumelbewegung resultiert. Eine derartige Schleifscheibenaufnahme 100 ist aus dem Stand der Technik bekannt und wird daher nicht dargestellt. Aufgrund dieser Taumelbewegung ist die Position der Schleifscheibenaufnahme 100 in Bezug auf die Mittenachse 18 nicht bekannt, wenn sich eine Schleifscheibenaufnahme 100 der Stapelvorrichtung 10 nähert, um mit einer neuen Schleifscheibe 12 bestückt zu werden.

Um eine Schleifscheibe 12 an der Schleifscheibenaufnahme korrekt zu positionieren, muss die Schleifscheibe 12 nicht nur mittig auf der Schleifscheibenaufnahme 100 positioniert werden, sondern die Öffnungen 32 an der Schleifscheibe 12 müssen mit Ausnehmungen 33 der Schleifscheibenaufnahme 100 fluchten. Diese Ausnehmungen 33 dienen der Absaugung von Abrieb, der beim Schleifprozess anfällt. Der Abrieb kann beispielsweise Schleifpartikel, Kühlmittel, Reinigungsmittel umfassen.

Die Schleifscheibenaufnahme muss daher bei jedem Wechsel der Schleifscheibe 12 in Bezug auf die in der Stapelvorrichtung 10 befindlichen Schleifscheiben 12 positioniert und justiert werden. Unter Positionierung wird dabei ein Arbeitsschritt verstanden, welcher die Mittenachse der Schleifscheibenaufnahme 100 mit der Mittenachse 18 in Übereinstimmung bringt.

Unter Justierung wird ein Arbeitsschritt verstanden, welcher die Öffnungen 32 der Schleifscheibe 12 mit den Ausnehmungen der Schleifscheibenaufnahme 100 in Übereinstimmung bringt.

Zur Positionierung wird daher die Schleifscheibenaufnahme 100 über das freie Ende 28 des Positionierelements 17 geführt, wobei die genaue Position der Mittenachse 18 des Positionselements 17 nicht genau bekannt ist, weil die Schleifscheibenaufnahme 100 bekanntlich eine taumelnde Bewegung ausführt. In der Schleifscheibenaufnahme 100 ist eine zylindrische Bohrung 101 ausgebildet, deren Durchmesser D grösser ist, als das obere konisch verlaufende Ende 28 des Positionierelements 17.

Da das Bodenelement 20 als ein schwingungsfähiges Element 19 ausgebildet ist, welches eine Bewegung des Positionierelements 17 mit dem Bodenelement 20 in Radialrichtung in Bezug auf die Mittenachse 18 ermöglicht, kann das Positionierelement 17 dank seinem konisch zulaufenden freien oberen Ende 28 in das zentrale Loch in der Schleifscheibe 12 eingreifen und sich bezüglich der zentralen Bohrung 101 in der Schleifscheibenaufnahme 100 zentrieren.

Das Positionierelement 17 ist axial in Richtung der Mittenachse 18 bewegbar. Das Positionierelement 17 ist als Stab ausgebildet, welcher mit seinem unteren Ende 29 in einer Bohrung 21 im Bodenelement 20 teilweise aufgenommen ist. In der Bohrung 21 ist ein Abstandselement 22 angeordnet, welches als Feder dargestellt ist.

Sobald die Schleifscheibenaufnahme 100 mit dem Positionierelement 17 in Eingriff gelangt und weiter nach unten geführt wird, wird der Translationsanteil der Taumelbewegung in die Lagerung eingeleitet. Das schwingungsfähige Element 19 fängt diese Taumelbewegung ab und kann sie entsprechend ausgleichen. Daher kann die Schleifscheibenaufnahme nur eine Drehbewegung um die Mittenachse 18 des Positionierelements 17 ausführen, sobald das freie Ende 28 des Positionierelements 17 mit der Bohrung 101 in der Schleifscheibenaufnahme 100 im Eingriff ist. Deshalb weist die Schleifscheibenaufnahme 100 die zentrale Bohrung 101 auf, deren Durchmesser einem Durchmesser des konischen Abschnitts des freien Endes 28 des Positionierelements 17 entspricht oder der etwas grösser als der Durchmesser des Positionierelements 17 ist.

Die Drehbewegung der Schleifscheibenaufnahme 100 kann durch ein Antriebselement 30 initiiert oder verstärkt werden, welches in Fig. 1 dargestellt ist. Das Antriebselement 30 umfasst eine Düse, wobei durch die Düse ein Druckfluidstrahl auf die Schleifscheibenaufnahme 100 gerichtet werden kann. Mittels des Druckfluidstrahls wird die Schleifscheibenaufnahme 100 in eine Drehbewegung versetzt.

Sobald die Schleifscheibenaufnahme 100 eine Drehbewegung ausführt, kann der Arbeitsschritt des Justierens durchgeführt werden. Hierzu wird die Schleifscheibenaufnahme 100 entlang der Mittenachse 18 weiter nach unten in Richtung der neuen Schleifscheibe 12 bewegt. Während dieser Bewegung wird das Positionierelement 17 in die Bohrung 21 gegen die Federkraft des Abstandselements 22 hineinbewegt.

Wenn die Schleifscheibenaufnahme 100 das obere freie Ende des oder der Führungselemente 16 erreicht, wird auch das Führungselement 16 bzw. werden sämtliche Führungselemente 16 in Richtung des Bodenelements 20 verschoben. Das untere Ende des Führungselements 16 wird in eine Führungsbohrung 24 hineinverschoben. Zwischen dem bodenelementseitigen Ende des Führungselements 16 und dem Bohrungsgrund der Führungsbohrung 24 ist ein Federelement 23 angeordnet.

Das obere Ende des Führungselements 16 ist in Kontakt mit der sich drehenden Schleifscheibenaufnahme 100. Sobald das obere Ende des Führungselements 16 auf die Bohrung 101 in der Schleifscheibenaufnahme trifft, wird das Führungselement 16 aus der Führungsbohrung 24 ein Stück hinausgedrängt. Das obere Ende des Führungselements 16 gelangt in Eingriff mit der Bohrung 101 der Schleifscheibenaufnahme 100 und blockiert diese, sodass eine weitere Drehbewegung unterbunden wird. In dieser Position fluchten die Öffnungen 32 der Schleifscheibe 12 exakt mit den Ausnehmungen 33 der Schleifscheibenaufnahme 100. Somit ist die Schleifscheibenaufnahme 100 korrekt positioniert, um eine Schleifscheibe 12 aufzunehmen.

Hierzu wird die Schleifscheibenaufnahme 100 weiter nach unten in Richtung der neuen Schleifscheibe 12 abgesenkt.

Der Öffnung 15 ist jeweils eine der Schleifscheiben 12 entnehmbar. Der Durchmesser der Öffnung 15 ist grösser als der Durchmesser der Schleifscheibe 12. Daher ist eines der drei Rückhalteelemente 25 gezeigt, welches in die Öffnung 15 hineinragt, um die Schleifscheiben 12 in der Stapelvorrichtung 10 zu halten.

Der Stapel von Schleifscheiben 12 ist von einem Auflageelement 26, z.B. eine Scheibe oder Platte, getragen, welches mittels eines Spannelements 27 in Gestalt einer Feder entlang der Achsen des Führungselements 16 und der Mittenachse 18 des Positionierelements 17 verschiebbar ist. Das Spannelement 27 stützt sich auf der Oberfläche des Bodenelements 20 ab.

Die Schleifscheibenaufnahme 100 wird soweit abgesenkt, bis sie in Kontakt mit der Schleifscheibe 12 kommt. Die Schleifscheibe 12 haftet auf der Oberfläche der Schleifscheibenaufnahme 100, sei es durch Applikation eines Unterdrucks, um die Schleifscheibe 12 anzusaugen, sei es mittels einer Klettverbindung oder einer Kombination verschiedener Haltemechanismen. Die Schleifscheibenaufnahme 100 mit der Schleifscheibe 12 wird anschliessend von der Stapelvorrichtung wegbewegt und ist bereit für einen neuen Einsatz.

Wenn die Schleifscheibe 12 flexibel ist, wird sie an den Rückhalteelementen 25 vorbei gezogen. Wenn die Schleifscheibe 12 als eine formstabile Schleifscheibe ausgebildet ist, können die Rückhalteelemente 25 einstellbar sein. Beispielsweise können sie aufklappbar oder nach aussen verschiebbar sein, sodass die Schleifscheibe 12 die Öffnung ungehindert passieren kann.

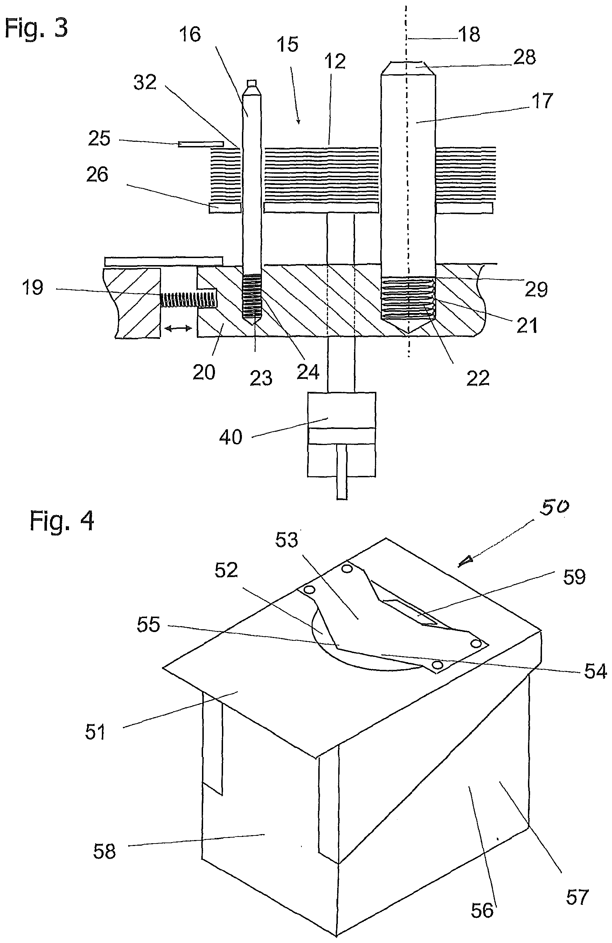

Fig. 3 zeigt eine Variante der Fig. 2 gemäss welcher ein Hubelement 40 für das Nachführen der Schleifscheiben 12 des Schleifscheibenstapels vorgesehen ist.

Fig. 4 zeigt eine Ansicht einer Ablösevorrichtung 50. Die Ablösevorrichtung 50 dient der Entfernung einer Schleifscheibe 12 von einer Schleifscheibenaufnahme 100 vor dem Scheibenwechsel. Eine Vorrichtung 1 zum automatischen Wechsel von Schleifscheiben 12 kann eine solche Ablösevorrichtung 50 umfassen. Bevor eine neue Schleifscheibe 12 auf der Schleifscheibenaufnahme 100 positioniert werden kann, muss die verschlissene oder gebrauchte Schleifscheibe 12 von der Schleifscheibenaufnahme 100 getrennt werden.

Die Ablösevorrichtung 50 umfasst eine Auflagefläche 51. Die Auflagefläche 51 weist eine Öffnung 52 auf, deren Durchmesser grösser als der Durchmesser der Schleifscheibe 12 ist. Ein Trennelement 53 ist oberhalb der Öffnung 52 angeordnet. Das Trennelement 53 erstreckt sich teilweise über die Öffnung 52, sodass die Schleifscheibenaufnahme 100 nicht in die Öffnung 52 eintauchen kann.

Das Trennelement 53 weist mindestens eine Trennkante 54 auf. Die Trennkante 54 umfasst eine Spitze 55, die radial in Richtung des Randes der Öffnung 52 zeigt. Die Spitze 55 kann v-förmig oder w-förmig oder mit asymmetrisch verlaufenden Kanten ausgebildet sein. Die Spitze 55 kann ein gezacktes Profil aufweisen.

Das Trennelement 53 kann auch als ein Scheibe ausgebildet sein, welche zumindest entlang der Trennkante 54 eine Wandstärke aufweist, die kleiner ist als der Abstand der Schleifscheibe 12 von der Schleifscheibenaufnahme. Beispielsweise kann das Trennelement 53 als ein dünnwandiges Blech ausgebildet sein.

Das Trennelement 53 ist mit Verbindungsmitteln lösbar auf der Auflagefläche 51 befestigt. Zwischen dem Trennelement 53 und der Auflagefläche 51 kann ein Distanzelement angebracht werden, um den Abstand des Trennelements 53 von der Auflagefläche 51 einzustellen. Die Verwendung eines Distanzelements ermöglicht es, die Vorrichtung für unterschiedliche dicke Typen von Schleifscheiben 12 zu verwenden.

Das Trennelement 54 kann ein Ablenkelement enthalten, welches das Ablösen der Schleifscheibe 12 unterstützen kann.

Ein Verfahren zum Ablösen einer Schleifscheibe 12 von einer Schleifscheibenaufnahme umfasst die folgenden Schritte: die Schleifscheibenaufnahme 100 wird über die gezeigte Auflagefläche 51 der Ablösevorrichtung 50 geführt, wobei die Schleifscheibenaufnahme 100 in Kontakt mit der Auflagefläche 51 steht. Hierbei wird die Schleifscheibe 12 vom Trennelement 53 erfasst, dessen Trennkante zwischen die Schleifscheibe 12 und die Auflagefläche 51 eingeschoben wird, wodurch die Schleifscheibe 12 von der Schleifscheibenaufnahme 100 abgelöst wird. Die Schleifscheibe 12 fällt dann durch eine unterhalb der Trennkante 54 befindliche Öffnung 52 in einen Sammelbehälter 56.

Die gebrauchten Schleifscheiben 12 werden im unterhalb der Öffnung 52 angeordneten Sammelbehälter 56 gesammelt und können fachgerecht entsorgt werden. Von dem Behälter 56 sind in Fig. 4 nur eine erste Seitenwand 57 sowie eine zweite Seitenwand 58 sichtbar.

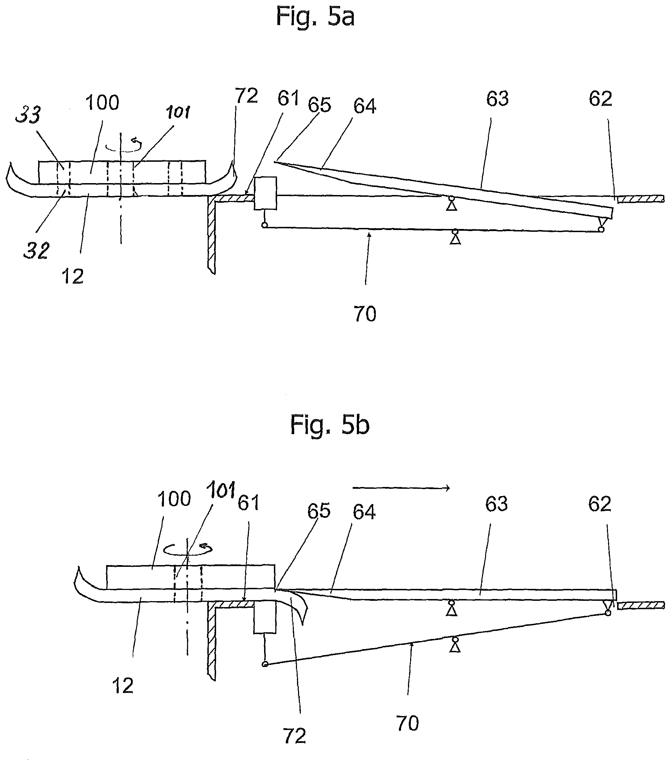

Fig. 5a und Fig. 5b zeigen ein weiteres Ausführungsbeispiel für eine Ablösevorrichtung 60. Diese Ablösevorrichtung 60 kann zum Einsatz kommen, wenn eine Schleifscheibe 12 derart auf der Schleifscheibenaufnahme 100 angeordnet ist, dass die Schleifscheibe 12 die Schleifscheibenaufnahme 100 peripher überragt. Der Rand 72 einer derartigen Schleifscheibe 12 kann sich aufbiegen, sodass dieser oberhalb der Trennkante 54 zu liegen kommen würde, wenn das Trennelement 53 verwendet würde, wie es in Fig. 4 gezeigt ist.

In diesem Fall kann ein kippbares Trennelement 63 verwendet werden. Dieses ist derart angeordnet, dass im gekippten Zustand die Trennkante 64 oder zumindest deren Spitze 65 etwas höher gelegen ist, als das gegenüberliegende Ende des kippbaren Trennelements 63. Wenn der Rand der Schleifscheibenaufnahme 100 die Trennkante 64 erreicht, wird an dieser Stelle durch die Schleifscheibenaufnahme 100 ein Kippmechanismus 70 betätigt, der die Trennkante 64 in Richtung der Auflagefläche 61 kippt, sodass sich der Anstellwinkel des Trennelements 63 verringert.

Durch die Änderung des Winkels erfasst die Trennkante 64 den Rand 72 der Schleifscheibe 12 und drückt ihn in Richtung der Auflagefläche 61. Dann kann die Bewegung der Schleifscheibenaufnahme 100 in Pfeilrichtung 71 fortgesetzt werden, was in Fig. 5b dargestellt ist. Das Trennelement 63 löst die Schleifscheibe 12 sukzessive von der Schleifscheibenaufnahme 100 ab.

Ein System umfasst eine Vorrichtung 1 zum automatischen Wechsel von Schleifscheiben 12, enthaltend eine Stapelvorrichtung 10 nach einem der vorhergehenden Ausführungsbeispiele sowie eine Ablösevorrichtung 50 nach einem der vorhergehenden Ausführungsbeispiele.

## Patentansprüche

1. Vorrichtung zum automatischen Wechsel von Schleifscheiben (12), umfassend eine Stapelvorrichtung(10) für eine Mehrzahl von Schleifscheiben (12), sowie mindestens ein Führungselement (16) zur vertikalen gegenseitigen Ausrichtung der Öffnungen (32) in den Schleifscheiben (12) parallel zu einer gemeinsamen Mittenachse (18), wobei das Führungselement (16) in Bezug auf die Mittenachse (18) exzentrisch angeordnet ist, weiter umfassend einen Werkzeugkopf mit einer drehbar gelagerten Schleifscheibenaufnahme (100) für eine Schleifscheibe (12), welcher Werkzeugkopf an einer Manipulationsvorrichtung zur Durchführung einer Schleifbewegung angeordnet ist,
**dadurch gekennzeichnet, dass**
ein Positionierelement (17) auf der Mittelachse (18) der Stapelvorrichtung (10) zur Positionierung des Werkzeugkopfs mit der daran ausgebildeten Schleifscheibenaufnahme (100) vorgesehen ist, wobei das Positionierelement (17) und das Führungselement (16) schwimmend an der Stapelvorrichtung (10) gelagert sind und dass im Werkzeugkopf eine zentrale Öffnung (101) zur Aufnahme des Positionierelements (17) ausgebildet ist, sodass durch die schwimmende Lagerung des Positionierelements (17) und des Führungselements (16) eine Positionierung des Werkzeugs auf dem Positionierelement (17) vereinfacht erfolgt selbst wenn der Werkzeugkopf das Positionierelement (17) nicht exakt mittig trifft, da die Position des Werkzeugkopfs mit der Schleifscheibenaufnahme (100) über die schwimmende Lagerung ausgeglichen werden kann.

2. Vorrichtung nach Anspruch 1, **dadurch gekennzeichnet, dass** ein Bodenelement (20) zur Aufnahme des Positionierelements (17) und des Führungselements (16) vorgesehen ist, wobei das Bodenelement (20) in der Stapelvorrichtung (10) ein schwingungsfähiges Element (19) enthält, durch welches eine Bewegung des Bodenelements (20) in Radialrichtung in Bezug auf die Mittenachse (18) ermöglicht ist.

3. Vorrichtung nach einem der vorhergehenden Ansprüche, **dadurch gekennzeichnet, dass** das Positionierelement (17) in Richtung der Mittenachse (18) axial bewegbar und in einer Bohrung (21) im Bodenelement (20) axial federelastisch aufgenommen ist, wobei in der Bohrung (21) eine Feder (2') als Abstandselement (22) angeordnet ist.

4. Vorrichtung nach einem der vorhergehenden Ansprüche, **dadurch gekennzeichnet, dass** das Positionierelement (17) eine grössere Länge als das Führungselement (16) aufweist und das Führungselement (16) überragt.

5. Vorrichtung nach einem der vorhergehenden Ansprüche, **dadurch gekennzeichnet, dass** das Positionierelement (17) als Stab ausgebildet ist, wobei das Positionierelement (17) ein oberes Ende (28) aufweist, welches über die zuoberst auf einem Stapel angeordnete Schleifscheibe (12) hinausragt und ein unteres Ende (29) aufweist, welches in der Bohrung (21) aufgenommen ist, wobei das obere Ende (28) insbesondere einen konischen Abschnitt umfasst.

6. Vorrichtung nach einem der vorhergehenden Ansprüche, **dadurch gekennzeichnet, dass** ein Antriebselement (30) zur Einleitung einer Drehbewegung der Schleifscheibenaufnahme (100) vorgesehen ist.

7. Vorrichtung nach Anspruch 6, **dadurch gekennzeichnet, dass** als Antriebselement (30) ein Druckfluidstrahl aus einer Düse auf die Schleifscheibenaufnahme (100) gerichtet ist.

8. Vorrichtung nach einem der vorhergehenden Ansprüche, **dadurch gekennzeichnet, dass** das Führungselement (16) mittels einer Feder (23) axial in der Bohrung (24) verschiebbar gelagert ist.

9. Vorrichtung zum automatischen Wechsel von Schleifscheiben nach einem der Ansprüche 1 bis 8, umfassend eine Ablösevorrichtung (50) für Schleifscheiben (12) von den Schleifscheibenaufnahmen (100), wobei die Ablösevorrichtung (50) eine Auflagefläche (51) umfasst und die Auflagefläche (51) eine Öffnung (52) aufweist, deren Durchmesser grösser als der Durchmesser der Schleifscheiben (12) ist, wobei Trennelement (53) oberhalb der Öffnung angeordnet ist.

10. Vorrichtung nach Anspruch 9, **dadurch gekennzeichnet, dass** das Trennelement (53) eine Trennkante (54) aufweist, wobei die Trennkante (54) eine Spitze (55) umfasst und/oder das Trennelement (53) mittels Verbindungsmitteln auf der Auflagefläche (51) lösbar oder unlösbar befestigt ist, wobei ein Distanzelement zwischen dem Trennelement (53) und der Auflagefläche (51) vorgesehen ist.

11. System umfassend eine Vorrichtung (1) zum automatischen Wechsel von Schleifscheiben (12) enthaltend eine Stapelvorrichtung (10) nach einem der Ansprüche 1 bis 7 sowie eine Ablösevorrichtung (50) nach einem der Ansprüche 9 oder 10.

## Claims

1. A device for automatically changing grinding discs (12), comprising a stacking device (10) for a plurality of grinding discs (12) as well as at least one guide element (16) for vertically mutually aligning the openings (32) in the grinding discs (12) parallel to a common central axis (18),
wherein the guide element (16) is eccentrically arranged relative to the central axis (18), further comprising an instrument head with a rotationally mounted grinding disc receiving part (100) for a grinding disc (12), said instrument head being arranged at a manipulation device for performing a grinding motion,
**characterized in that**
a positioning element (17) is provided on the central axis (18) of the stacking device (10) for positioning the instrument head with the grinding disc receiving part (100) formed thereon, wherein the positioning element (17) and the guide element (16) are mounted in a floating manner at the stacking device (10) and **in that** a central opening (101) is formed in the instrument head for receiving the positioning element (17) so that a positioning of the instrument on the positioning element (17) occurs in a simplified manner through the floating mounting of the positioning element (17) and of the guide element (16) even when the instrument head does not impact the positioning element (17) exactly centrally, because the position of the instrument head with the grinding disc receiving part (100) can be balanced via the floating mounting.

2. The device according to Claim 1, **characterized in that** a ground element (20) is provided for receiving the positioning element (17) and the guide element (16), wherein the ground element (20) contains an oscillatory element (19) in the stacking device (10) through which oscillatory element a movement of the ground element (20) in the radial direction relative to the central axis (18) is enabled.

3. The device according to any one of the preceding claims, **characterized in that** the positioning element (17) is axially movable in the direction of the central axis (18) and is axially resiliently received in a bore (21) in the ground element (20), wherein a spring (2') is arranged in the bore (21) as a spacing element (22).

4. The device according to any one of the preceding claims, **characterized in that** the positioning element (17) has a greater length than the guide element (16) and projects beyond the guide element (16).

5. The device according to any one of the preceding claims, **characterized in that** the positioning element (17) is formed as a rod, wherein the positioning element (17) has an upper end (28) which projects beyond the grinding disc (12) arranged at the very top of a stack and a lower end (29) which is received in the bore (21), wherein the upper end (28) in particular comprises a conical section.

6. The device according to any one of the preceding claims, **characterized in that** a driving element (30) is provided for initiating a rotational movement of the grinding disc receiving part (100).

7. The device according to Claim 6, **characterized in that** a pressure fluid stream from a nozzle is directed towards the grinding disc receiving part (100) as the driving element (30).

8. The device according to any one of the preceding claims, **characterized in that** the guide element (16) is displaceably mounted axially in the bore (24) by means of a spring (23).

9. The device for automatically changing grinding discs according to any one of Claims 1 to 8, comprising a detachment device (50) for grinding discs (12) from the grinding disc receiving parts (100), wherein the detachment device (50) comprises a resting surface (51) and the resting surface (51) has an opening (52) of which the diameter is greater than the diameter of the grinding discs (12), wherein a separating element (53) is arranged above the opening.

10. The device according to Claim 9, **characterized in that** the separating element (53) has a separating edge (54), wherein the separating edge (54) comprises a tip (55) and/or the separating element (53) is detachably or non-detachably attached on the resting surface (51) by means of connection means, wherein a distance element is provided between the separating element (53) and the resting surface (51).

11. A system comprising a device (1) for automatically changing grinding discs (12), containing a stacking device (10) according to any one of Claims 1 to 7 as well as a detachment device (50) according to either one of Claims 9 or 10.

## Revendications

1. Dispositif pour le changement automatique de disques de meulage (12), comprenant un dispositif d'empilement (10) pour une pluralité de disques de meulage (12), ainsi qu'au moins un élément de guidage (16) pour l'alignement vertical réciproque des ouvertures (32) dans les disques de meulage (12) parallèlement à un axe central (18) commun,
l'élément de guidage (16) étant disposé de façon excentrée par rapport à l'axe central (18), comprenant en outre une tête d'outil avec un logement de disque de meulage (100) pour un disque de meulage (12) monté de façon pivotante, laquelle tête d'outil est disposée sur un dispositif de manipulation pour l'exécution d'un mouvement de meulage,
**caractérisé en ce qu'**
un élément de positionnement (17) est prévu sur l'axe central (18) du dispositif d'empilement (10) pour le positionnement de la tête d'outil avec le logement de disque de meulage (100) y étant formé, l'élément de positionnement (17) et l'élément de guidage (16) étant montés de façon flottante sur le dispositif d'empilement (10) et **en ce qu'**une ouverture centrale (101) est formée dans la tête d'outil pour l'accueil de l'élément de positionnement (17), de telle sorte qu'un positionnement de l'outil sur l'élément de positionnement (17) est effectué de façon simplifiée grâce au montage flottant de l'élément de positionnement (17) et de l'élément de guidage (16) même lorsque la tête d'outil ne rencontre pas l'élément de positionnement (17) exactement au centre, parce que la position de la tête d'outil avec le logement de disque de meulage (100) peut être compensée par le montage flottant.

2. Dispositif selon la revendication 1, **caractérisé en ce qu'**un élément de fond (20) est prévu pour l'accueil de l'élément de positionnement (17) et de l'élément de guidage (16), l'élément de fond (20) comprenant un élément oscillatoire (19) dans le dispositif d'empilement (10), par lequel un mouvement de l'élément de fond (20) est permis dans la direction radiale par rapport à l'axe central (18).

3. Dispositif selon l'une quelconque des revendications précédentes, **caractérisé en ce que** l'élément de positionnement (17) est mobile axialement dans la direction de l'axe central (18) et **en ce qu'**il est accueilli axialement de façon élastique dans un alésage (21) dans l'élément de fond (20), un ressort (2') étant disposé dans l'alésage (21) comme élément d'écartement (22).

4. Dispositif selon l'une quelconque des revendications précédentes, **caractérisé en ce que** l'élément de positionnement (17) présente une longueur plus importante que l'élément de guidage (16) et dépasse l'élément de guidage (16).

5. Dispositif selon l'une quelconque des revendications précédentes, **caractérisé en ce que** l'élément de positionnement (17) est formé comme une barre, l'élément de positionnement (17) présentant une extrémité (28) supérieure, laquelle dépasse du disque de meulage (12) disposé tout en haut d'un empilement et ayant une extrémité inférieure (29), laquelle est accueillie dans l'alésage (21), l'extrémité supérieure (28) comprenant en particulier une section conique.

6. Dispositif selon l'une quelconque des revendications précédentes, **caractérisé en ce qu'**un élément d'entraînement (30) est prévu pour le déclenchement d'un mouvement de rotation du logement de disque de meulage (100).

7. Dispositif selon la revendication 6, **caractérisé en ce qu'**un jet de fluide sous pression est dirigé d'une buse sur le logement de disque de meulage (100), comme élément d'entraînement (30).

8. Dispositif selon l'une quelconque des revendications précédentes, **caractérisé en ce que** l'élément de guidage (16) est monté axialement dans l'alésage (24) de façon déplaçable, à l'aide d'un ressort (23).

9. Dispositif pour le changement automatique de disques de meulage selon l'une des revendications 1 à 8, comprenant un dispositif d'enlèvement (50) de disques de meulage (12) du logement de disques de meulage (100), le dispositif d'enlèvement (50) comprenant une surface de pose (51) et la surface de pose (51) comprenant une ouverture (52), dont le diamètre est supérieur au diamètre des disques de meulage (12), un élément de séparation (53) étant disposé au-dessus de l'ouverture.

10. Dispositif selon la revendication 9, **caractérisé en ce que** l'élément de séparation (53) présente une arête de séparation (54), l'arête de séparation (54) comprenant une pointe (55) et/ou l'élément de séparation (53) étant fixé à l'aide d'éléments de fixation de façon détachable ou non détachable sur la surface de pose (51), un élément d'espacement étant prévu entre l'élément de séparation (53) et la surface de pose (51).

11. Système comprenant un dispositif (1) pour le changement automatique de disques de meulage (12) comprenant un dispositif d'empilement (10) selon l'une des revendications 1 à 7, ainsi qu'un dispositif (50) selon l'une des revendications 9 ou 10.
